# EUROPEAN PATENT APPLICATION

(11) **EP 4 557 476 A1**
(43) Date of publication of application: **21.05.2025**
(21) Application number: 23210999.1
(22) Date of filing: 20.11.2023
(51) Int. Cl.: H01M 50/209, H01M 50/229, H01M 50/264, H01M 50/289

(54) **END PLATE FOR A BATTERY UNIT ARRANGEMENT**

(71) Applicant: Volvo Car Corporation, 405 31 Göteborg (SE)
(72) Inventor: LEVIN BJÄRNLID, Fredrik, 40531 Göteborg (SE); NASSIF, Charbel, 40531 Göteborg (SE); HJÄLM WALLBORG, Martin, 40531 Göteborg (SE); BERGMAN, Hampus, 40531 Göteborg (SE); PERSSON, Klas, 40531 Göteborg (SE)
(74) Representative: Maiwald GmbH

(57) **Abstract**

The disclosure relates to an end plate (8) for a battery unit arrangement (1) comprising multiple battery units (2, 4), the end plate (8) comprising a first surface (9) for contacting an outer surface (3) of an outermost battery unit (2) of the battery unit arrangement (1) and a second surface (10) for at least partially receiving a compression force (F) for compressing the battery unit arrangement (1), the first surface (9) being located opposite of the second surface (10) for distributing the compression force (F) over the outer surface (3), the end plate (8) having a first state (11), in which the second surface (10) does not receive the compression force (F) and the first surface (9) is in contact with a portion of the outer surface (3), and the end plate (8) having a second state (12), into which the end plate (8) is configured to be transitioned from the first state (11) when the second surface (10) receives the compression force (F), the first surface (9) being in contact with a larger portion of the outer surface (3) in the second state (12) than in the first state (11).

## Description

### TECHNICAL FIELD

The present disclosure relates to an end plate for a battery unit arrangement, a battery unit arrangement, and a method for manufacturing a battery unit arrangement.

### BACKGROUND ART

When manufacturing battery unit arrangements, the battery units of the battery unit arrangement should be compressed to optimize battery health and reduce the thickness of the overall size of the battery unit arrangement, which may be particularly relevant in applications with limited installation space.

To withstand the applied compression forces, the outermost battery units may be provided with a stiffer material than the inner battery units between the outermost battery units, such as extruded or die cast aluminum. However, these materials are expensive and add additional weight to the battery unit arrangement.

### SUMMARY

The objective of dealing with the compression force in an inexpensive and low-weight manner is at least partially solved by the subject matter of the independent claims of the present disclosure, wherein further examples are incorporated in the dependent claims.

According to a first aspect of this disclosure, there is provided an end plate for a battery unit arrangement comprising multiple battery units, the end plate comprising a first surface for contacting an outer surface of an outermost battery unit of the battery unit arrangement and a second surface for at least partially receiving a compression force for compressing the battery unit arrangement, the first surface being located opposite of the second surface for distributing the compression force over the outer surface. The end plate has a first state, in which the second surface does not receive the compression force and the first surface is in contact with a portion of the outer surface. Also, the end plate has a second state, into which the end plate is configured to be transitioned from the first state when the second surface receives the compression force, the first surface being in contact with a larger portion of the outer surface in the second state than in the first state.

Accordingly, the end plate of this disclosure provides for receiving a compression force, based on which it transitions from a first state into a second state, in which the surface or area of contact of the end plate with the outer surface of the outermost battery unit of the battery unit arrangement is increased, thereby providing a more uniform compression force distribution throughout the battery unit arrangement without having to use any expensive and/or heavy material. The battery health may be improved, and the battery size may be decreased despite not having to provide a stiff and expensive material on the outermost battery units.

The battery unit arrangement may comprise any number of battery units. All battery units may be designed interchangeable with one another, e.g., identical to each other. Specifically, the outermost battery units may be designed, at least with their housings or entirely, interchangeable with or identical to the other battery units, i.e., the inner battery units located between the outermost battery units. The battery units may be arranged in a row and/or adjacent to one other. Two battery units of the multiple battery units may be located at opposite outermost sides of the battery unit arrangement and accordingly be referred to as outermost battery units. Other battery units may be located or placed in between the two outermost battery units and referred to as inner battery units. The battery unit arrangement may, for example, be a battery module or battery pack having several battery cells as battery units. Alternatively, for example, the battery unit arrangement may be a battery pack having several battery modules as battery units, wherein each of the battery modules may comprise several battery cells.

The end plate has two states, namely a first state and a second state, between which it may be transitioned by applying the compression force from the compression unit thereon or not and when the end plate is arranged at the outer surface of one of the outermost battery units of the battery unit arrangement, e.g., when the first surface of the end plate is in contact with the outer surface of the outermost battery unit. The transition of the end plate may be based on an elastic deformation of the end plate, where the elastic deformation may transition the end plate from a first shape, e.g., concave shape, in the first state, which may also be referred to as an unloaded or relaxed state of the end plate, to a second shape, in particular a flat shape, in which the area or surface of the end plate contacting the outer surface is increased. The second state may also be referred to as a loaded or tensioned state. By having the first shape and a smaller area of contact with the outer surface of the outermost battery unit in the first state, the end plate may better adopt from its first shape to the second shape in the second state, realizing a larger contact of the end plate, in particular a substantially full contact along the entire outer surface of the end plate and/or outermost battery unit, with the outer surface of the outermost battery unit. Further, the end plate may be made from a much lighter and/or weaker material than would normally be possible without having the transition of the states, in particular shapes, as herein described.

For example, the end plate may be configured as a solid board. Configured as a solid board, the end plate may have a simple and easy to manufacture solid geometry in the form of a board. In particular, the end plate may be an integral part, or, in other words, an end plate made from one piece.

In an example, the end plate may comprise a polymer material. In particular, the end plate may be made from a polymer material. This allows the end plate to be very light and cost-effective while still allowing a high compression strength and large area of contact in the second state due to the first shape in the first state, which is being in particular transformed into a second shape of increased contact area with the outer surface of the outermost battery unit when the end plate is transitioned into the second state.

In an example, the polymer material may be a fiber-reinforced polymer material. Thereby, the compression strength of the end plate may be increased without adding any weight or high material costs.

In an example, the end plate may have a concave shape in the first state. Specifically, the concave shape may be concave with respect to the outermost battery unit, at the outer surface of which it may be arranged. The concave shape may be provided by at least one bent of the end plate. Specifically, the end plate may be a pre-bent end plate. In the first state, the end plate may be of concave shape due to the at least one bent. However, when transitioning it into the second state, the shape may change, overcoming the at least one bent and providing the second shape, e.g., in the form of a substantially flat shape. The concave shape may be formed such that the end plate contacts a portion, in particular a central or center portion, of the outer surface of the outermost battery unit while being arranged at the outer surface of the outermost battery unit, and otherwise being distanced from the outer surface of the outermost battery unit. The part of the end plate that is distanced from the outer surface of the outermost battery unit may form the concave part of the end plate, whereas a central or center part of the end plate, which may be surrounded by the concave part, may be substantially flat such as to be in contact with the outer surface in the first state.

In an example, the end plate may have a substantially flat shape in the second state. Thereby, a particularly large contact area between the end plate, in particular its first surface, and the outermost battery unit may be provided, increasing the distribution of compression force over most or all of the outer surface of the outermost battery unit and thereby improving the distribution of compression force throughout all of the battery units.

In an example, the end plate may be configured to substantially fully contact the outer surface of the outermost battery unit in the second state. Thereby, a maximum contact area between the end plate and the outermost battery unit may be provided, increasing the distribution of compression force over the entire outer surface of the outermost battery unit and thereby improving the distribution of compression force throughout all of the battery units.

In an example, the end plate may be configured for transitioning from the first state to the second state by elastic deformation. Accordingly, the end plate may be provided with elastic properties to make the elastic deformation from the first state, in particular the concave shape of the end plate, to the second state, in particular a substantially flat shape of the end plate.

According to a second aspect of this disclosure, there is provided a battery unit arrangement comprising multiple battery units, two end plates according to the first aspect of this disclosure and at least one compression unit, the end plates being in the second state, in which their first surfaces are in contact with the outer surfaces of one of the outermost battery units of the battery unit arrangement and the second surfaces receive the compression force from the at least one compression unit.

It may accordingly be provided that when the compression force is removed from the outermost battery units by removing the at least one compression unit from the end plates, the end plates may transition from the second state to the first state and thereby back to the concave shape, for example. However, alternatively, it may be provided that additional fixation and/or compression means, such as an adhesive as will be described further below, are provided, in which case the transition from the second state to the first state may be prevented or limited even if the compression force is partially or entirely removed. The two end plates may be arranged at outermost battery units located opposite of one another and receiving oppositely oriented or, in other words, directed compression forces from the compression unit, e.g., the directions of the compression forces being oriented towards each other. The battery units of the battery unit arrangement may be compressed against each other from different directions, thereby providing a better uniform pressure distribution throughout the battery unit arrangement.

In an example, the housing of the battery units may comprise the two end plates and side plates. The side plates, which may be two or more, e.g., four, may be housing the battery units from the sides at which the end plates do not cover the battery units. The side plates may be extending along all battery units, while the end plates may only be arranged at one respective outermost or, in other words, end battery unit at an end or outermost side of the battery unit arrangement.

In an example, each one of the end plates may substantially uniformly distribute the compression force over the outer surfaces of the outermost battery units. In other words, the end plates forward the compression force from the at least one compression unit substantially uniformly over the entire outer surfaces of the outermost battery units, for example. This may be facilitated when the end plate is in contact with the substantially full outer surface of the outermost battery unit and when the compression force is evenly distributed on the end plate as well. Thereby, the pressure distribution throughout the battery unit arrangement may be provided as uniform as possible to improve the health of the battery unit arrangement.

In an example, the battery units may be arranged adjacent to one another, in particular facing each other with their surfaces and/or in parallel to each other. The battery unit arrangement may further comprise battery pads in between adjacent battery units. The battery pads may further aid in uniform pressure distribution between the battery units.

In an example, the battery pads may comprise compressible material. The compressible material may be a foam material, for example. For example, the foam material may be a foamed plastic material. Thereby, the aid of the battery pads in providing a uniform pressure distribution between the battery units may be further increased. Alternatively, or additionally, the battery pads may be configured for thermally isolating adjacent battery units from one another. Thereby, another function besides the uniform pressure distribution is provided by the battery pads, reducing the risk of thermal problems with the battery unit arrangement, in particular the risk of a thermal runaway.

In an example, the at least one compression unit may be a compression strap for compressing the battery units. An alternative wording for the compression strap is a compression band, for example. A compression strap may be made from an elastic material, which may be stretched by tensioning it. Such a compression strap may be tensioned, e.g., by having a smaller inner size or diameter than the outer size or diameter of the battery unit arrangement and pulling the compression strap over the battery unit arrangement, thereby providing the compression force on one or both opposite end plates, in particular their second surfaces, of the battery unit arrangement.

In an example, the at least one compression unit may be adhered to the outermost surfaces of the outermost battery units by an adhesive bonding joint. Such adhesive bonding joint may be provided by using an adhesive in addition to the compression unit. For example, the compression unit may be at least partially attached to one or both end plates of the battery unit arrangement by the adhesive, thereby providing the adhesive bonding joint in addition to the force bonding between the end plates provided by the applied compression force. This has the advantage that the compression applied to the battery unit arrangement is particularly durable, e.g., for periods of ten or more years, even if the compression unit relaxes over time and the compression force decreases over time.

According to a third aspect of this disclosure, there is provided a method for manufacturing a battery unit arrangement according to the second aspect of this disclosure, wherein the method comprises:
- arranging the multiple battery units in between the two one end plates, and
- arranging the at least one compression unit at the second surfaces of the two end plates such that the second surfaces receive the compression force from the at least one compression unit, thereby compressing the multiple battery units.

Of course, the method may comprise further steps corresponding to the features described above with respect to the end plate and the battery unit arrangement. For example, the method may further comprise arranging the battery pads in between adjacent battery units and/or adhering the at least one compression unit to the outermost surfaces of the outermost battery units by an adhesive bonding joint.

It is noted that the above examples may be combined with each other irrespective of the aspect involved. Further, any feature mentioned with respect to any of the end plate and battery unit arrangement may also be applied to the method and vice versa.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a cross sectional view of a battery unit arrangement with one end plate in a first state; and
- Figure 2: shows a cross sectional view of a battery unit arrangement with two end plates in a second state.

### DETAILED DESCRIPTION

The Figures are merely schematic representations and serve only to illustrate examples of the disclosure. Identical or equivalent elements are in principle provided with the same reference signs.

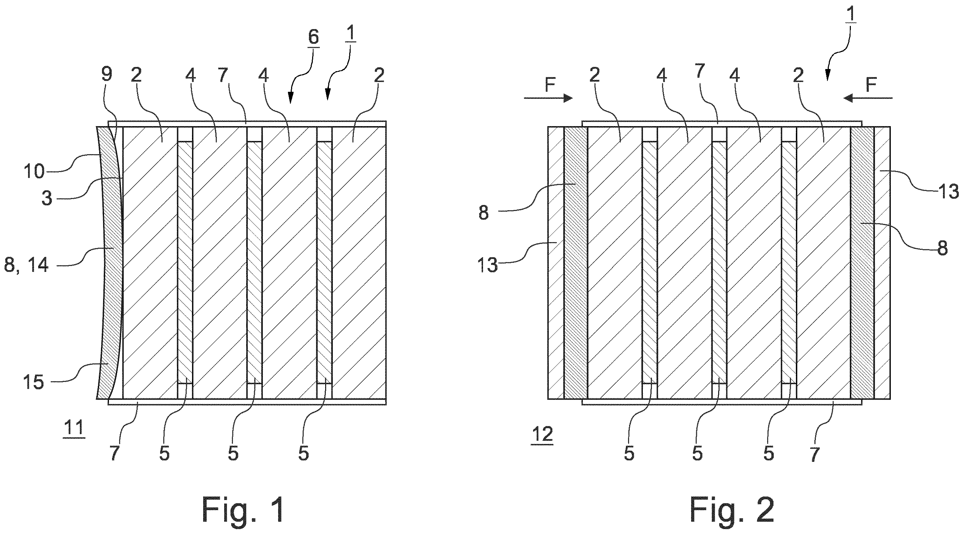

Figure 1 shows a cross sectional view of a battery unit arrangement 1 comprising multiple battery units 2, 4. Only exemplary, four battery units 2, 4 are shown herein. However, the number of battery units 2, 4 may be more or less than shown in the Figures 1 and 2. The battery units 2, 4 are of a prismatic type, e.g., have a prismatic housing, in this example. Alternatively, the battery units 2, 4 may be of a cylindrical design, pouch design or any other design.

The battery unit arrangement 1 may be a battery module or a battery pack, for example. In a battery module, the battery units 2, 4 may be individual battery cells, which may be electrically connected to each other, e.g., in series, to form the battery module. In a battery pack, the battery units 2, 4 may be individual battery modules, which may comprise individual battery cells, and which may be electrically connected to each other, e.g., in series or in parallel.

The battery unit arrangement 1 may comprise further components, which are not shown herein. Such further components may be, for example, bus bars electrically connecting the battery units 2, 4 with one another, one or more control units or logic boards configured for controlling electrically charging and/or discharging of the battery units 2, 4, temperature control units for controlling the temperature of the battery units 2, 4 and/or similar.

The battery units 2, 4 of this example are arranged in parallel to each other and/or adjacent to each other. Specifically, the battery units 2, 4 are facing each other with their largest respective outer surfaces 3. Between each pair of adjacent battery units 2, 4, the battery unit arrangement 1 comprises a battery pad 5. The battery pads 5 may have at least partially thermal isolation properties, at least partially thermally isolating adjacent battery units 2, 4 from each other. For this purpose, the battery pads 5 may be made from a material with low thermal conductivity, for example. The battery pads 5 may comprise or be made from compressible material, e.g., a foam material. By having a compressible material, the battery pads 5 may comprise compressive properties such that they may be compressed. In this way, the compression force applied on the battery units 2, 4 to compress the battery unit arrangement 1 may be distributed in a particularly uniform manner between the battery units 2, 4.

The battery unit arrangement 1 further comprises side plates 7 arranged underneath and on top of the battery units 2, 4. Specifically, the side plates 7 may extend along all battery units 2, 4. The side plates 7 may be facing circumferential surfaces of the battery units 2, 4.

Further, the battery unit arrangement 1 comprises two end plates 8 as seen in Fig. 2. In Fig. 1, only one end plate 8 is exemplary shown. Besides the number of end plates 8, a further difference between the Figures 1 and 2 is that the end plate 8 in Fig. 1 is in a first state 11, whereas the end plates 8 are in a second state 12 in Fig. 2.

The end plates 8 of the battery unit arrangement 1 may be facing end or front faces, in particular outer surfaces 3, e.g., oriented or facing outwards of the battery unit arrangement 1, of the outermost battery units 2. The end or front faces may be oriented perpendicular to the circumferential surfaces.

The end plate 8 of Fig. 1 is configured for arrangement at the outer surface 3 of an outermost battery unit 2 of the battery units 2, 4 of the battery unit arrangement 1. Accordingly, the battery end plate 8 is shown in Fig. 1 to be arranged, in particular directly arranged with its first surface 9 facing the outer surface 3 of the left outermost battery unit 2, i.e., without any further part in between, at the outer surface 3 of the left outermost battery unit 2. Thereby, the first surface 9 may touch the outer surface 3 of the outermost battery unit 2.

Further, the end plate 8 of Fig. 1 is configured for receiving a compression force F from a compression unit 13 for compressing the battery unit arrangement 1. This is shown in Fig. 2, where the compression force F provided by the compression unit 13 is applied to and received by the end plate 8 and in turn compresses the battery unit arrangement 1. In particular, the further end plate 8 in Fig. 2 opposite of and together with the end plate 8 as shown in Fig. 1 is compressing the battery units 2, 4 by the same compression unit 13 from opposite sides of the battery unit arrangement 1, wherein the further end plate 8 is arranged at the right outermost battery unit 2. Thereby, the end plates 8 are distributing the compression force F from the compression unit 13 over the outer surfaces 3 of the outermost battery units 2 substantially uniformly to all battery units 2, 4.

As seen in Fig. 1, the end plate 8, in fact both end plates 8 of Fig. 1, have a first state 11, in which the end plates 8 do not receive the compression force F from the compression unit 13. In other words, the end plate 8 as shown in Fig. 1 is in a relaxed or unloaded state. In this state, the end plates 8 have a concave shape. The concave shape is such that the end plate 8 contacts a portion of the outer surface 3 of the respective outermost battery unit 2 while being arranged at the outer surface 3 of the outermost battery unit 2. In particular, the concave shape extends outwards towards the outer surface 3 or outermost battery unit 2, thereby contacting a portion thereof.

As seen in Fig. 2, the end plates 8 further have a second state 12, into which the end plates 8 are configured to be transitioned from the first state 11 when the end plates 8 receive the compression force F while being arranged at the outer surfaces 3 of the outermost battery units 2. The end plates 8 contact a larger portion of the outer surfaces 3 of the outermost battery units 2 in the second state 12 than in the first state 11. In particular, the end plates 8 are substantially in full surface contact with the outer surfaces 3 of the outermost battery units 2 in the second state 12, thereby evenly or, in other words, uniformly distributing the compression force F over the entire outer surfaces 3 of the outermost battery units 2, which is being consequently forwarded in a uniform manner via the battery pads 5 to the other battery units 4 or, in other words, inner battery units 4. Thereby, a particularly uniform compression throughout the battery unit arrangement 1 is achieved.

The transition of the end plates 8 from the first state 11 to the second state 12 may be based on an elastic deformation of the end plates 8. For the transition, the end plates 8 may be deformed or reshaped from the concave shape, e.g., as seen in Fig. 1, to a substantially flat shape, e.g., as seen in Fig. 2.

As seen in Fig. 1, the end plate 8 may have a center section 14, which may comprise a part of the first surface 9 of the end plate 8 being in contact or, in other words, touching the outer surface 3 of the outermost battery unit 2. The end plate 8 may further have a surrounding section 15, surrounding the center section 14, and being bent, in particular away from the outermost battery unit 2 at which it is configured for being arranged, relative to the center section 14. Thereby, the concave shape may be provided.

As further seen in Fig. 1 and 2, the end plates 8 are configured as solid boards. In particular, the end plates 8 may be made as single or integral plates. The end plates 8 may comprise or be made from a polymer material. The polymer material may be a fiber-reinforced polymer material. The fiber-reinforced polymer material may be a glass fiber-reinforced polymer material, for example.

The compression unit 13 may be a compression strap, for example. As shown in Fig. 2, for example, the compression strap may compress the battery unit arrangement 1 from opposite sides of the battery unit arrangement 1, at which the outermost battery units 2 are located. Accordingly, both outermost battery units 2 receive a compression force F from the compression unit 13.

The compression unit 16 may be bonded to the outermost battery units 2 by an adhesive bonding joint. Accordingly, an adhesive may be used to provide such joint in addition to the applied compression forces F. This has the advantage that the compression applied to the battery unit arrangement 1 is particularly durable, e.g., for periods often years or more, even if the compression unit 13 and/or adhesive bonding joint relaxes or weakens over time and the compression forces F decreases over time.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. Any reference signs in the claims should not be construed as limiting the scope of the claims.

### LIST OF REFERENCE SIGNS

- 1: battery unit arrangement
- 2: outermost battery unit
- 3: outer surface
- 4: inner battery unit
- 5: battery pad
- 6: housing
- 7: side plate
- 8: end plate
- 9: first surface
- 10: second surface
- 11: first state
- 12: second state
- 13: compression unit
- 14: center section
- 15: surrounding section

## Claims

1. An end plate (8) for a battery unit arrangement (1) comprising multiple battery units (2, 4), the end plate (8) comprising a first surface (9) for contacting an outer surface (3) of an outermost battery unit (2) of the battery unit arrangement (1) and a second surface (10) for at least partially receiving a compression force (F) for compressing the battery unit arrangement (1), the first surface (9) being located opposite of the second surface (10) for distributing the compression force (F) over the outer surface (3),
the end plate (8) having a first state (11), in which the second surface (10) does not receive the compression force (F) and the first surface (9) is in contact with a portion of the outer surface (3), and
the end plate (8) having a second state (12), into which the end plate (8) is configured to be transitioned from the first state (11) when the second surface (10) receives the compression force (F), the first surface (9) being in contact with a larger portion of the outer surface (3) in the second state (12) than in the first state (11).

2. The end plate (8) of claim 1, the end plate (8) comprising a polymer material.

3. The end plate (8) of claim 2, the polymer material being a fiber-reinforced polymer material.

4. The end plate (8) of any one of the previous claims, the end plate (8) having a concave shape in the first state (11).

5. The end plate (8) of any one of the previous claims, the end plate (8) having a substantially flat shape in the second state (12).

6. The end plate (8) of any one of the previous claims, the first surface (9) being in substantially full contact with the outer surface (3) in the second state (12).

7. The end plate (8) of any one of the previous claims, the end plate (8) being configured for transitioning from the first state (11) to the second state (12) by elastic deformation.

8. A battery unit arrangement (1) comprising multiple battery units (2, 4), two end plates (8) of any one of the previous claims and at least one compression unit (13), the end plates (8) being in the second state (12), in which their first surfaces (9) are in contact with the outer surfaces (3) of one of the outermost battery units (2) of the battery unit arrangement (1) and the second surfaces (10) receive the compression force (F) from the at least one compression unit (13).

9. The battery unit arrangement (1) of claim 8, the battery unit arrangement (1) comprising a housing (9) of the battery units (2, 4), the housing (9) comprising the two end plates (8) and side plates (7).

10. The battery unit arrangement (1) of claim 8 or 9, each one of the end plates (8) substantially uniformly distributing the compression force (F) over the outer surfaces (3) of the outermost battery units (2).

11. The battery unit arrangement (1) of any one of claims 8 to 10, the battery units (2, 4) being arranged adjacent to one another and the battery unit arrangement (1) comprising battery pads (5) in between adjacent battery units (2, 4).

12. The battery unit arrangement (1) of claim 8, the battery pads (5) comprising a compressible material.

13. The battery unit arrangement (1) of any one of claims 8 to 12, the compression unit (13) being a compression strap for compressing the battery units (2, 4).

14. The battery unit arrangement (1) of any one of claims 8 to 13, the at least one compression unit (13) being adhered to the outermost surfaces (3) of the outermost battery units (2) by an adhesive bonding joint.

15. A method for manufacturing a battery unit arrangement (1) according to any one of claims 8 to 14, wherein the method comprises:
- arranging the multiple battery units (2, 4) in between the two one end plates (8), and
- arranging the at least one compression unit (13) at the second surfaces (10) of the two end plates (8) such that the second surfaces (10) receive the compression force (F) from the at least one compression unit (13), thereby compressing the multiple battery units (2, 4).
